# EUROPÄISCHE PATENTSCHRIFT

(11) **EP 2 256 427 B1**
(45) Veröffentlichungstag und Bekanntmachung des Hinweises auf die Patenterteilung: **19.12.2018**
(21) Anmeldenummer: 10005271.1
(22) Anmeldetag: 20.05.2010
(51) Int. Cl.: F24H 9/20, F24H 1/18, G01K 3/06, G05D 23/00, G05D 23/19, G01K 13/00, G05D 23/24

(54) **Warmwasserbereiter**
Water heater
Chauffe-eau

(30) Priorität: 20.05.2009 DE 102009022246
(43) Veröffentlichungstag der Anmeldung: 01.12.2010
(73) Patentinhaber: Stiebel Eltron GmbH & Co. KG, 37603 Holzminden (DE)
(72) Erfinder: Hoffmann, Fred, 34260 Kaufungen (DE); Nolte, Ralf-Rainer, 37671 Höxter (DE); Krämer, Radolf, 37671 Höxter (DE)

(56) Entgegenhaltungen:
- US-A- 5 968 393
- US-A1- 2004 177 817

## Beschreibung

Die vorliegende Erfindung betrifft einen Warmwasserbereiter.

Warmwasserbereiter weisen typischerweise einen Speicher für erwärmtes oder zu erwärmendes Wasser, eine Heizeinrichtung zum Aufheizen des sich in dem Speicher befindlichen Wassers und einen Regler zum Regeln der Aufheizung des sich in dem Speicher befindlichen Wassers auf.

Die Temperatur des sich in dem Speicher befindlichen Warmwassers wird typischerweise durch eine Reglerhysterese mit geringen Abweichungen auf der Solltemperatur gehalten, d. h. die Regelung greift ein, wenn ein Wert über- oder unterschritten wird.

Wenn jedoch ein elektronischer Regler mit einer Energiespar-Betriebsart vorgesehen ist, dann kann die Wassertemperatur in dem Speicher in Abhängigkeit des Benutzerverhaltens abgesenkt werden, d. h. wenn keine Zapfung erfolgt. Das Wasser kann dann anschließend zeitgesteuert oder abhängig von dem Benutzerverhalten in einem kurzen Zeitraum auf ein höheres Temperaturniveau aufgeheizt werden. Wenn jedoch die Speichertemperatur stark abgesenkt worden ist, beispielsweise auf 35°C, dann kann der Nutzer das Mischventil der Armatur in Stellung "warm" verstellen, um Warmwasser mit einer gewünschten Temperatur zapfen zu können. Wenn jedoch der elektronische Regler nach der Zapfung das Wasser in dem Speicher wieder stark erwärmt, beispielsweise auf eine Temperatur von > 55°C, dann kann es vorkommen, dass der Nutzer sich verbrüht, wenn die Stellung der Armatur nach wie vor auf "warm" verblieben ist und der Nutzer die Temperatur nicht durch eine bewusste Handlung verändert hat.

Warmwasserspeicher laut dem Oberbegriff des Anspruchs 1 sind beispielsweise aus der US 2004/0177817 A1 bekannt. Dort wird ein Warmwasserspeicher mit Einlassleitung, Auslassleitung und einem Steuerschaltkreis offenbart. Das Heizelement kann ein elektrisches Widerstandsheizelement, ein Gasheizelement oder eine Kombination davon sein. In einer Ausführung umfasst das Gasheizelement einen ersten Brennabschnitt und einen zweiten Brennabschnitt, der von dem ersten Brennabschnitt getrennt gesteuert wird.

Die Energieverluste bzw. Wärmeverluste eines Warmwasserspeichers beispielsweise während einer Standby-Zeit stellen ein Maß der Effizienz des Warmwasserspeichers dar. Daher ist es wünschenswert, einen Warmwasserspeicher vorzusehen, der eine verbesserte Effizienz, d. h. geringere Wärmeverluste aufweist.

Es ist somit eine Aufgabe der vorliegenden Erfindung, einen Warmwasserbereiter mit einer verbesserten Regelung insbesondere in Bezug auf einen Energiesparmodus vorzusehen.

Diese Aufgabe wird durch einen Warmwasserspeicher gemäß Anspruch 1 gelöst. Somit wird ein Warmwasserbereiter mit einem elektrischen Heizkörper, einer Wasserführungseinheit, einem Temperatursensor und einem Regler zum Regeln der Temperatur des sich in der Wasserführungseinheit befindlichen Wassers vorgesehen. Der Regler weist eine erste und eine zweite Regeleinheit auf. Die zweite Regeleinheit dient zum Durchführen einer Regelung basierend auf einer variablen Hysterese, wobei die Hysterese von einem Parameter abhängt.

Als Parameter, von der die Hysterese abhängt, kann ein Einstellbereich eines Drehreglers verwendet werden.

Gemäß einem Aspekt der vorliegenden Erfindung weist der Parameter die Temperatur des Wassers, die gezapfte Wassermenge und/oder ein Zeitintervall nach dem letzten Zapfvorgang auf.

Gemäß einem weiteren Aspekt der vorliegenden Erfindung dient die erste Regeleinheit der Regelung mit einer konstanten Hysterese. In einer ersten Betriebsart wird die erste Regeleinheit und in einer zweiten Betriebsart wird die zweite Regeleinheit aktiviert.

Gemäß einem weiteren Aspekt der vorliegenden Erfindung stellt die erste Betriebsart eine normale Betriebsart und die zweite Betriebsart eine Standby-Betriebsart dar.

Gemäß einem weiteren Aspekt der vorliegenden Erfindung weist der Warmwasserbereiter eine Bedieneinheit auf. Durch Betätigung der Bedieneinheit kann zwischen der ersten und zweiten Betriebsart geschaltet werden.

Gemäß einem weiteren Aspekt der vorliegenden Erfindung steigt die variable Hysterese der zweiten Regeleinheit mit steigender Höhe des Parameters.

Gemäß einem weiteren Aspekt ist der Regler in einer normalen Betriebsart dazu ausgestaltet, die Temperatur des sich in der Wasserführungseinheit befindlichen Wassers auf eine erste Solltemperatur zu regeln. Der Regler ist in einer Energiesparbetriebsart dazu ausgestaltet, die Temperatur des sich in der Wasserführungseinheit befindlichen Wassers auf eine zweite Solltemperatur zu regeln, wenn die Temperatur des sich in der Wasserführungseinheit befindlichen Wassers unter die zweite Solltemperatur sinkt. Die zweite Solltemperatur ist niedriger als die erste Solltemperatur.

Gemäß einem Aspekt der vorliegenden Erfindung ist die erste und/oder zweite Solltemperatur einstellbar. Die Aktivierung der Energiesparbetriebsart ist ebenfalls einstellbar.

Der Temperatursensor kann als gedruckter Temperatursensor mit einer anpassbaren Länge oder als Foliensensor mit ersten und zweiten Leiterbahnen auf einer Folie ausgestaltet sein, wobei die zweiten Leiterbahnen redundant ausgestaltet sind.

Die zweite Leiterbahn kann wenigstens mit einer ersten Leiterbahn parallel verschaltet sein. Bei Unterbrechung einer Leiterbahn wird somit trotzdem ein Widerstandswert gemessen. Dabei verändert sich der Widerstandswert durch das Auflösen der Parallelschaltung um einen definierten Wert. Dieser definierte Wert ist in der Auswerteelektronik hinterlegt und wird von ihr erkannt. Die Elektronik legt somit eine neue Kennlinie ab und liefert weiterhin zuverlässige Messergebnisse. Sie repariert sich somit selbst. Dies ist insbesondere dann vorteilhaft, wenn der Temperatursensor auf den Außenmantel des Warmwasserbereiters aufgebracht und anschließend eingeschäumt wird. Eine Reparatur des Sensors ist dann nicht mehr möglich. Durch die Parallelschaltung zweier Leiterbahnen ist eine Temperaturmessung auch dann möglich, wenn eine Leiterbahn ausfällt.

Es können auch drei oder mehr Leiterbahnen miteinander parallel verschaltet sein. Weitere Ausgestaltungen der Erfindung sind Gegenstand der Unteransprüche.

Die Wasserführungseinheit gemäß der Erfindung kann als ein Wasserbehälter oder ein Wasserkanal ausgestaltet sein.

Gemäß einem weiteren Aspekt ist der Warmwasserspeicher in Form eines Schichtspeichers ausgebildet. In der ersten Betriebsart regelt der Regler die Temperatur des sich in dem Warmwasserspeicher befindlichen Wassers auf einen unteren Schwellwert des Ladegrads, beispielsweise wenn keine Zapfung von Warmwasser erfolgt ist. In der zweiten Betriebsart kann der Regler das sich

in dem Warmwasserspeicher befindliche Wasser zwischen einem unteren und einem oberen Schwellwert des Ladegrades regeln, wobei der untere und obere Schwellwert einstellbar ist.

Vorteile und Ausführungsbeispiele der Erfindung werden nachstehend unter Bezugnahme auf die Zeichnung näher erläutert.
- Fig. 1: zeigt ein schematisches Blockschaltbild eines Reglers eines Warmwasserbereiters gemäß einem ersten Ausführungsbeispiel,
- Fig. 2: zeigt eine schematische Darstellung eines Bedienelementes eines Warmwasserbereiters gemäß einem zweiten Ausführungsbeispiel,
- Fig. 3: zeigt eine schematische Darstellung eines Bedienelementes eines Warmwasserbereiters gemäß einem dritten Ausführungsbeispiel,
- Fig. 4: zeigt eine schematische Darstellung eines Bedienelementes eines Warmwasserbereiters gemäß einem vierten Ausführungsbeispiel,
- Fig. 5: zeigt eine grafische Darstellung der Einstellbereiche eines elektronischen Reglers eines Warmwasserbereiters gemäß einem fünften Ausführungsbeispiel,
- Fig. 6: zeigt eine grafische Darstellung mit einem beispielhaften Temperaturverlauf eines Warmwasserbereiters gemäß der Erfindung,
- Fig. 7: zeigt eine schematische Darstellung eines Zapfvorganges gemäß einem fünften Ausführungsbeispiel,
- Fig. 8: zeigt eine schematische Darstellung eines weiteren Zapfvorganges gemäß dem fünften Ausführungsbeispiel,
- Fig. 9: zeigt eine schematische Darstellung eines Teils eines Warmwasserbereiters gemäß einem sechsten Ausführungsbeispiel,
- Fig. 10: zeigt eine schematische Darstellung eines Temperatursensors

- Fig. 11: zeigt eine schematische Darstellung der Anschlüsse für einen Temperatursensor gemäß Fig. 10,
- Fig. 12: zeigt eine schematische Darstellung eines Temperatursensors,

- Fig. 13: zeigt eine weitere schematische Ansicht eines Temperatursensors,
- Fig. 14: zeigt eine schematische Ansicht eines Temperatursensors.

- Fig. 15: zeigt eine schematische Ansicht eines Temperatursensors gemäß einer weiteren Ausführungsform
- Fig. 16: zeigt eine Kennlinie einer Leiterbahn gemäß der in Fig. 15 gezeigten Ausführungsform

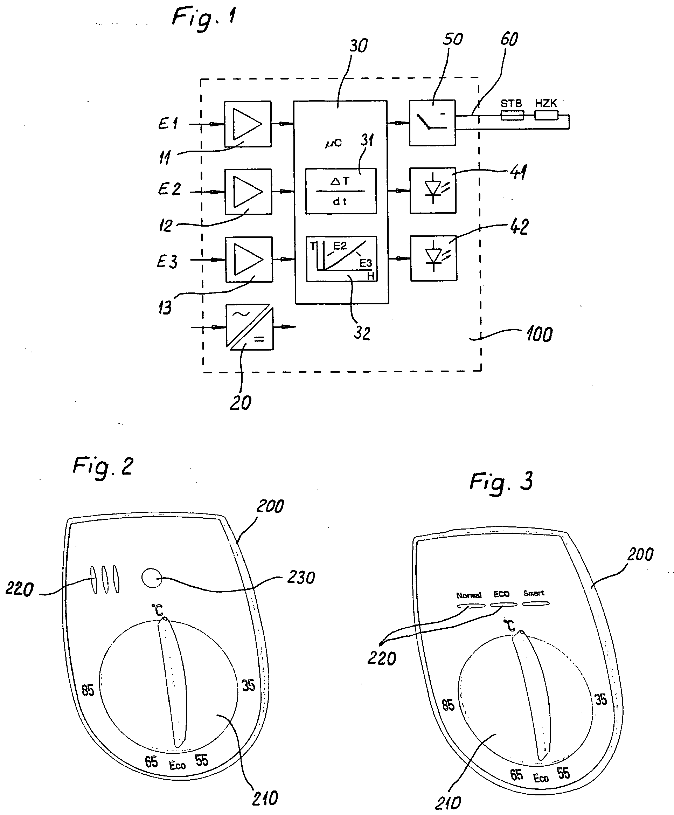

Fig. 1 zeigt ein Blockschaltbild eines Reglers eines Warmwasserbereiters gemäß einem ersten Ausführungsbeispiel. Der Regler 100 weist einen Messeingang E1, einen ersten und zweiten Sollwerteingang E2, E3 und einen Relaisausgang 60 auf. Ferner weist der Regler 100 einen Spannungswandler 20 zum Umwandeln von Wechselspannung in Gleichspannung auf. Die drei Eingänge E1 - E3 sind jeweils mit einem Verstärker 11, 12 und 13 verbunden. Die Ausgänge der drei Verstärker 11 - 13 sind mit einem Mikrocontroller 30 verbunden. Der Mikrocontroller 30 weist eine erste und zweite Reglereinheit 31, 32 auf. Die Ausgänge des Mikrocontrollers sind mit einem Schalter 50, einer Anzeigeeinheit 41 und einer Betriebszustandsanzeige 42 verbunden.

An den Messeingang E1 kann ein Widerstandsthermometer oder Thermoelement zur Erfassung der Wassertemperatur in einem Speicher des Warmwasserspeichers vorgesehen sein. An dem ersten Sollwerteingang E2 kann die Wassersolltemperatur bei einer konstanten Hysterese (beispielsweise ± 3K) eingestellt werden. Bei dem zweiten Sollwerteingang E3 kann eine Wassersolltemperatur bei einer variablen Hysterese eingestellt werden.

Die erste Regeleinheit 31 des Mikrocontrollers dient dazu, eine Regelung mit einer konstanten Hysterese, z. B. ± 3K, basierend auf der ersten Sollwerteingabe E1 vorzusehen. Die zweite Regeleinheit 32 dient dazu, eine Regelung mit einer variablen Hysterese basierend auf der zweiten Sollwerteingabe E2 vorzusehen. Die variable Reglerhysterese kann beispielsweise mit steigender Temperatur oder Warmwasserdurchfluss beeinflusst werden. Beispielsweise kann die Hysterese mit steigender Solltemperatur größer werden. Entsprechendes gilt für größer werdende Wasserverbrauchsmengen. Die Hysterese kann ebenfalls von der vergangenen Zeit nach einer letzten Zapfung abhängen.

Bevorzugt wird die erste Regelung mit einer konstanten Hysterese in einer ersten Betriebsart durchgeführt. Die zweite Regelung wird mit einer variablen Hysterese in einer zweiten Betriebsart durchgeführt. Die variable Hysterese hängt von Parametern ab und steigt mit steigendem Parameter.

Fig. 2 zeigt eine Darstellung eines Bedienelementes eines Warmwasserspeichers gemäß einem zweiten Ausführungsbeispiel. Der Warmwasserbereiter gemäß dem zweiten Ausführungsbeispiel kann beispielsweise einen Regler gemäß einem ersten Ausführungsbeispiel aufweisen. Das Bedienelement 200 weist einen (Regler-)Drehknopf 210, eine Betriebszustandsanzeige 220 sowie eine Aufheizkontrollanzeige 230 auf. Die Betriebszustandsanzeige 220 kann aus mindestens einer optischen Anzeigeeinheit, z. B. einer LED, bestehen. Entsprechendes gilt für die Aufheizkontrollanzeige 230. Der Reglerdrehknopf 210 kann als ein Drehknopf ausgestaltet sein und kann ferner eine Drückknopffunktion aufweisen, d. h. wenn der Drehknopf 210 betätigt wird, dann kann beispielsweise der Mikrocontroller dazu veranlasst werden, zwischen der ersten und zweiten Regeleinheit 31, 32 umzuschalten.

Der Regeldrehknopf 210 dient ferner dazu, die obere Solltemperatur des Wassers in dem Speicher des Warmwasserspeichers einzustellen.

Beispielsweise kann der Reglerknopf 210 über ein Stellelement mit einem Potentiometer oder einem Digitalgeber auf einer Platine des Reglers verbunden sein. Durch Betätigen des Reglerknopfes kann zwischen verschiedenen Betriebsarten ausgewählt werden.

Die jeweils ausgewählte Betriebsart kann beispielsweise mittels der Betriebszustandsanzeige 220 dargestellt werden.

Fig. 3 zeigt eine schematische Ansicht eines Bedienelementes eines Warmwasserbereiters gemäß einem dritten Ausführungsbeispiel. Das Bedienelement 200 weist einen Reglerdrehknopf 210 und eine Betriebszustandsanzeige 220 auf. Die Ausgestaltung des Reglerdrehknopfes 210 gemäß dem dritten Ausführungsbeispiel entspricht dabei im Wesentlichen der Ausgestaltung des Reglerdrehknopfes gemäß dem zweiten Ausführungsbeispiel. Die Betriebszustandsanzeige 220 kann hierbei Normal, Eco und Smart darstellen, d. h. es können drei optische Anzeigeeinheiten vorgesehen werden.

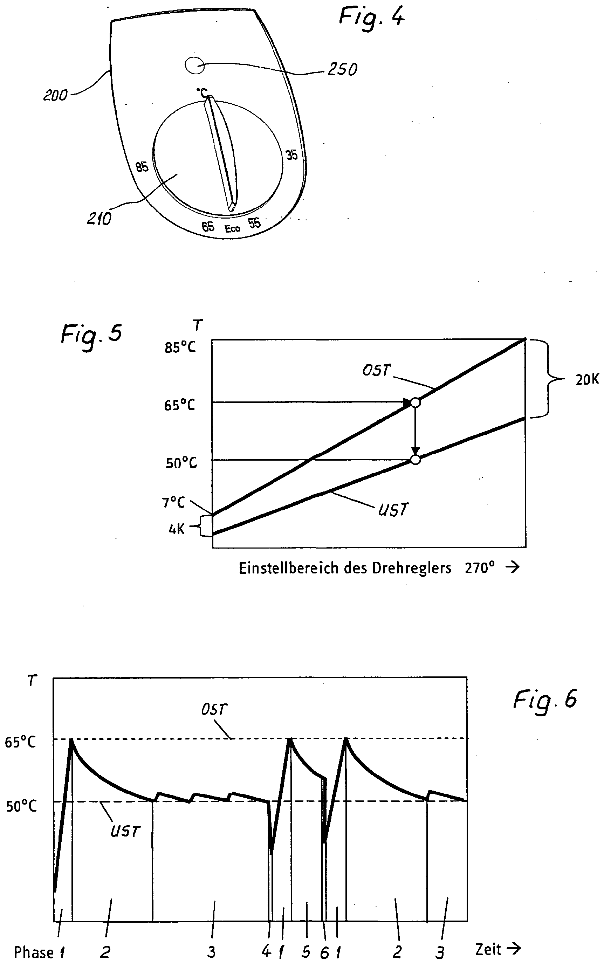

Fig. 4 zeigt eine schematische Darstellung eines Bedienelementes eines Warmwasserbereiters gemäß einem vierten Ausführungsbeispiel. Das Bedienelement 200 weist einen Reglerdrehknopf 210 und eine optische Anzeige 250 auf. Die Ausgestaltung des Reglerdrehknopfes 210 gemäß dem vierten Ausführungsbeispiel entspricht im Wesentlichen der Ausgestaltung des Reglerdrehknopfes gemäß dem ersten Ausführungsbeispiel. Die verschiedenen Betriebsarten können beispielsweise durch Betätigen des Reglerdrehknopfes 210 ausgewählt werden. Die jeweilige Betriebsart kann durch die Anzeigeneinheit 250 beispielsweise durch unterschiedliche Farben wiedergegeben werden, so kann beispielsweise die Standardbetriebsart durch eine rote Farbe, eine Eco-Betriebsart durch eine grüne Farbe und ein Smart-Programm durch eine blaue Farbe dargestellt werden. Nach erfolgter Auswahl der Betriebsart kann die Anzeigeneinheit blinken, bis die entsprechende Temperatur in dem Speicher erhalten worden ist.

Die Standard- bzw. Normalbetriebsart des Reglers regelt die Aufheizung des sich in dem Speicher befindlichen Wassers derart, dass das Wasser auf einer Solltemperatur gehalten wird. Dies erfolgt typischerweise durch eine konstante Reglerhysterese.

Ein Energiesparprogramm Eco weist neben einer oberen Solltemperatur auch eine untere Solltemperatur auf. Die obere Solltemperatur entspricht dabei beispielsweise der Solltemperatur gemäß dem Standardprogramm. Die untere Solltemperatur entspricht dabei einer Solltemperatur in einem Standby-Modus bzw. einem Energiesparmodus. Mit anderen Worten, wenn sich der Warmwasserspeicher in einem Standby-Modus befindet, dann soll das Wasser auf eine geringere Temperatur aufgeheizt werden als in der Standardbetriebsart, um Wärmeverluste möglichst zu vermeiden. Wenn jedoch eine Zapfung erfolgt, dann soll typischerweise auf die Normalbetriebsart mit der oberen Solltemperatur gewechselt werden, um eine möglichst schnelle Erwärmung des sich in dem Speicher befindlichen Warmwassers zu ermöglichen. Dieses Energiesparprogramm kann beispielsweise durch Betätigung des Reglerknopfes an- und ausgeschaltet werden.

Fig. 5 zeigt eine schematische Darstellung einer oberen und unteren Solltemperatur für eine Regelung gemäß der Erfindung. Hierbei kann der Regler basierend auf dem Regler gemäß dem ersten Ausführungsbeispiel ausgestaltet sein. Die zweite Regeleinheit 32 von Fig. 1 dient dazu, eine variable Reglerhysterese vorzusehen. Diese Hysterese ist beispielsweise abhängig von dem Einstellbereich des Drehreglers, d. h. beispielsweise abhängig von der gewünschten Solltemperatur. So kann die Hysterese beispielsweise bei 85°C 20K betragen und bei einer Frostschutzeinstellung nur 4K betragen.

Die obere Solltemperatur ist vorzugsweise linear oder proportional abhängig zum Drehwinkel des Reglerdrehknopfes. Die untere Solltemperatur kann einen beliebigen Kurvenverlauf aufweisen.

Fig. 6 zeigt eine Darstellung von Zapfvorgängen bei Warmwasserspeichern gemäß der Erfindung. In der Phase 1 erfolgt eine Speicheraufheizung auf eine obere Solltemperatur von beispielsweise 65°C. In einer Phase 2 erfolgt eine langsame Abkühlung des Wassers im Speicher bis zum Erreichen einer unteren Solltemperatur UST, da z. B. kein Zapfvorgang erfolgt ist. Nach Erreichen der unteren Solltemperatur UST ist eine geringe Reglerhysterese, d. h. eine Reglerhysterese innerhalb eines Reglerbandes von z. B. ± 3K, zu sehen. In der Phase 4 erfolgt ein Zapfvorgang und somit ein schneller Abkühlvorgang, so dass sich ein Aufheizvorgang in Phase 1 anschließt, bis eine obere Solltemperatur OST erreicht worden ist. In der Phase 5 erfolgt eine langsame Abkühlung des Wassers, da z. B. kein Zapfvorgang erfolgt ist, ohne jedoch die untere Solltemperatur UST zu erreichen. In der Phase 6 erfolgt wiederum ein Zapfvorgang mit einer schnellen Abkühlung, wonach ein erneutes Aufheizen (Phase 1) auf die obere Solltemperatur OST erfolgt.

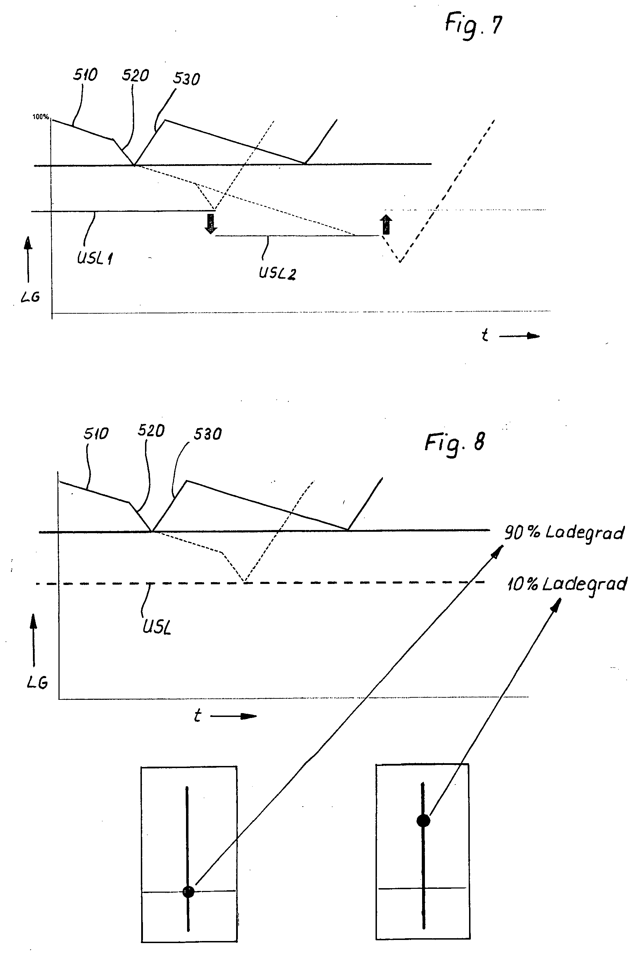

Fig. 7 zeigt eine schematische Darstellung eines Zapfvorganges gemäß einem fünften Ausführungsbeispiel der Erfindung. Gemäß dem fünften Ausführungsbeispiel wird ein Warmwasserbereiter vorgesehen, der beispielsweise einen Regler gemäß dem ersten Ausführungsbeispiel aufweist. Dieser Regler kann beispielsweise im unteren Speicherbereich vorgesehen werden, damit ein rasches Nachladen von Wasser bei einer Entnahme von Warmwasser gewährleistet werden kann. Dazu muss, wie bereits in dem ersten Ausführungsbeispiel ausgeführt, die Temperatur des sich in dem Speicher befindlichen Wassers bestimmt werden. Dies kann gemäß dem fünften Ausführungsbeispiel durch einen Integralsensor erfolgen, der an der Längsseite des Speichers befestigt werden kann. Der Integralsensor ermittelt somit eine integrale Temperatur des Speichers, so dass sich Rückschlüsse auf den Ladegrad des Speichers ziehen lassen. Der Ladegrad wiederum kann zu einer effizienten Regelung des Warmwasserspeichers verwendet werden. Diese Regelung kann wiederum beispielsweise in einer Automatikbetriebsart oder in einer Verbrauchervorgabe-Betriebsart erfolgen.

In der Automatikbetriebsart kann der Ladegrad des Warmwasserspeichers auf einen unteren Schwellwert USL1 reduziert werden, wenn keine Zapfung erfolgt ist. Wenn jedoch eine Zapfung erfolgt, dann kann der Ladegrad wieder vorzugsweise auf den vorherigen Wert angehoben werden. Diese Automatikbetriebsart ist vorteilhaft, weil Verluste minimiert werden können, die während eines Standby-Betriebes (keine Zapfung) erfolgen. Wenn es jedoch zu einer Zapfung kommt, dann führt die Automatikbetriebsart nicht zu einer merklichen Reduzierung der Temperatur des Warmwassers oder der Durchflussmenge.

Gemäß dem fünften Ausführungsbeispiel wird somit die Temperatur des sich in dem Speicher befindlichen Wassers herabgesenkt (d. h. durch fehlendes Nachheizen kühlt sich das in dem Speicher befindliche Wasser ab). Die Temperatur sinkt dann bis auf einen unteren Schwellwert. Wenn dieser Schwellwert erreicht ist, dann erfolgt eine entsprechende Regelung, um das sich in dem Speicher befindliche Wasser auf diesen Schwellwert zu erhalten. Dies kann beispielsweise durch eine Reglerhysterese mit einem konstanten Toleranzband wie in dem ersten Ausführungsbeispiel beschrieben erreicht werden. Der untere Schwellwert wird erst durch Aufheizen des sich in dem Speicher befindlichen Wassers verlassen, wenn ein Zapfvorgang erfolgt ist und das sich in dem Speicher befindliche Wasser abkühlt.

Der untere Schwellwert kann beispielsweise bei einer Temperatur von 38°C liegen, damit zumindest sichergestellt sein kann, dass der Nutzer duschen kann, ohne dass es zu einer weiteren Aufladung kommt. Der untere Schwellwert lässt sich alternativ dazu einstellen und kann sowohl höher als auch niedriger als 38°C sein.

Der Integral-Temperatursensor kann dazu verwendet werden, einen Energieabfallgradienten über die Höhe des Speichers zu bestimmen.

Fig. 8 zeigt eine schematische Darstellung eines weiteren Zapfvorganges gemäß dem fünften Ausführungsbeispiel. In Fig. 8 ist insbesondere die Aufladung bei einem Warmwasserbereiter in einer Verbrauchervorgabe-Betriebsart gezeigt. Hierbei kann der Verbraucher den Ladegrad individuell beispielsweise zwischen 10 und 90 % einstellen. Dies ist insbesondere vorteilhaft, weil jeder Endverbraucher seinen eigenen spezifischen Komfortbedarf auch im Hinblick auf den Energieverbrauch bestimmen kann. Die weitere Regelung entspricht dann im Wesentlichen der Regelung gemäß der Automatikbetriebsart. Der Unterschied zwischen der Automatikbetriebsart und der Verbrauchervorgabe-Betriebsart besteht darin, dass ein Verbraucher die untere und obere Grenze des Ladegrades selbst festlegen kann. Die obere in der Fig. 8 gezeigte Kurve stellt den Energieinhalt des Speichers über die Zeit dar. Wenn der Speicher auf einen oberen Schwellwert aufgeheizt worden ist, dann kann es anschließend zu einer Abkühlung kommen, d. h. der Energieinhalt des Speichers sinkt. Wenn jedoch gezapft wird, dann wird der Energieinhalt weiter absinken. Wenn jedoch ein oberer Schwellwert von beispielsweise 90° erreicht wird, dann wird eine Regelung des Warmwasserspeichers aktiviert und es erfolgt eine weitere Aufheizung. Wenn der Ladegrad durch den Endverbraucher jedoch auf lediglich 10% eingestellt ist, dann wird eine Aufladung erst dann erfolgen, wenn der untere Schwellwert unterschritten ist.

Dies ist insbesondere vorteilhaft im Hinblick auf die Verluste im Standby-Betrieb, da eine Aufladung erst erfolgt, wenn der untere Schwellwert erreicht ist.

Der Warmwasserspeicher kann beispielsweise in Form eines Schichtspeichers implementiert sein, d. h. es können verschiedene Schichten mit unterschiedlicher Temperatur in dem Speicher vorhanden sein. Durch Wärmeleitung und Grenzflächenkonvektion an den Temperaturgrenzen zwischen heißem und warmem Wasser kann es jedoch zu einer Reduzierung der Temperatur kommen. Typischerweise ist die Temperatur im oberen Bereich des Speichers höher als die Temperatur am Boden des Speichers.

Durch die Verwendung eines Integral-Temperatursensors an dem Speicher kann bestimmt werden, ob eine Temperaturschichtung vorhanden ist oder ob es bereits zu einer Vermischung gekommen ist. Hierbei können die Ausganswerte eines Integral-Temperatursensors und eines zweiten Temperatursensors verglichen werden. Der Integral-Temperatursensor kann beispielsweise dazu dienen, eine Temperatur bezogen auf eine Höhe des Speichers zu ermitteln. Der zweite Sensor kann beispielsweise im unteren oder oberen Bereich des Speichers angeordnet werden.

Der zweite Temperatursensor kann vorzugsweise im oberen Bereich des Speichers vorgesehen werden. Anschließend erfolgt ein Vergleich, inwieweit der Ladegrad oder die integrierte Temperatur des Speichers von dem gemessenen Wert des zweiten Temperatursensors abweicht.

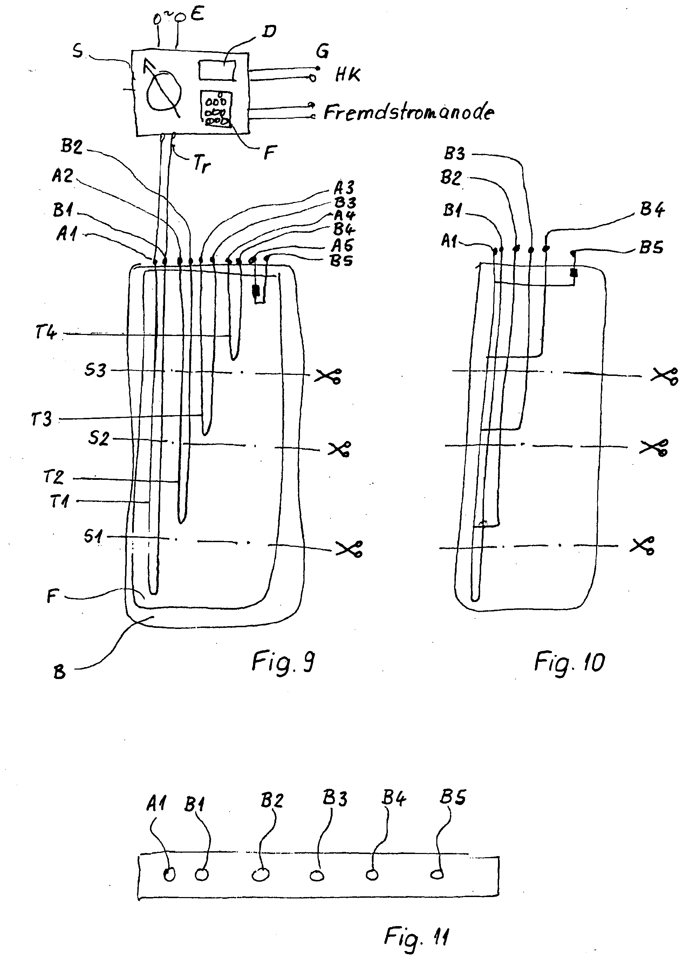

Fig. 9 zeigt eine schematische Darstellung eines Teils eines Warmwasserbereiters gemäß einem sechsten Ausführungsbeispiel. Hierbei weist der Warmwasserbereiter einen Speicher, einen Temperatursensor und einen Regler auf. Ein Temperatursensor F kann verschiedene einzelne Sensoren T1 - T5 aufweisen, wobei der Sensor T5 einen NTC- oder einen PTC-Sensor darstellt. Die Sensoren T1 bis T5 können gedruckte Sensoren mit unterschiedlichen Längen darstellen. Die Längen können an die unterschiedlichen Höhen des Behälters angepasst sein. Zur Anpassung der Sensoren an die unterschiedlichen Höhen der Behälter können diese entlang der Linien S1, S2, S3 abgeschnitten und an die Höhe des Speichers angepasst werden. Der Sensor weist verschiedene elektrische Anschlüsse A1 - A5 und B1 - B5 auf. Entsprechend der abgeschnittenen Länge des Speichers (s. Schnitt S1, S2, S3) müssen unterschiedliche Anschlüsse verwendet werden. Wenn beispielsweise der Sensor beim Schnitt S3 abgeschnitten worden ist, dann werden die Anschlüsse A4 und B4 verwendet.

Die Steuereinheit S weist einen Temperatureingang TR auf, welcher mit dem Temperatursensor gekoppelt ist. Die Steuereinheit kann ferner ein Display G und ein Bedienfeld F aufweisen.

Fig. 10 zeigt eine schematische Darstellung eines Temperatursensors gemäß einem sechsten Ausführungsbeispiel. Der Temperatursensor weist sechs Anschlüsse auf. Der Temperatursensor kann ebenfalls an unterschiedlichen Stellen durchschnitten werden, um an unterschiedliche Höhen von Warmwasserspeichern angepasst zu werden. Die Bahnen der Temperatursensoren sind so ausgestaltet, dass Abzweigungen vorhanden sind. Dies hat insbesondere den Vorteil, dass Leiterbahnen im Vergleich zum sechsten Ausführungsbeispiel eingespart werden können.

Fig. 11 zeigt eine Draufsicht auf Anschlüsse für einen Temperatursensor gemäß Fig. 10.

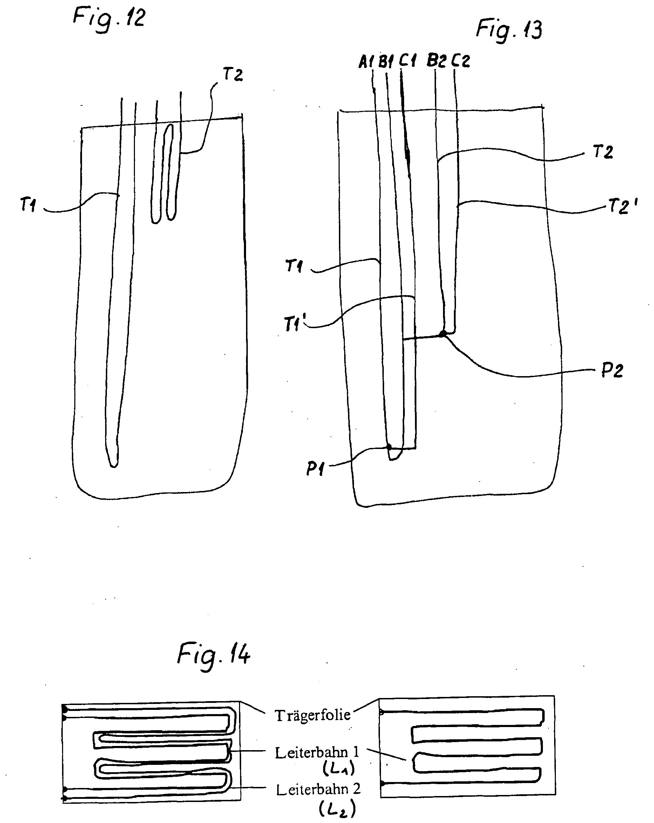

Fig. 12 zeigt eine schematische Darstellung eines Temperatursensors. Der Temperatursensor weist eine erste Schleife T1 und eine zweite Schleife T2 auf. Die erste Schleife T1 stellt einen Integralsensor dar, welcher sich über die ganze Höhe des Speichers erstreckt. Die zweite Schleife T2 stellt einen Temperatursensor beispielsweise im oberen Bereich des Speichers dar.

Der Temperartursensor gemäß Fig. 13 weist eine erste Schleife T1 mit mehreren Abzweigungen B1, C1, B2, C2 auf. Die Leiterbahnen des Temperatursensors T1' können beispielsweise eine andere Widerstandskennlinie aufweisen als der Temperatursensor T1. Der erste Temperatursensor kann eine Abzweigung P1 aufweisen, an die ein Temperatursensor T1' angeschlossen ist. Ferner kann ein zweiter Temperatursensor T2, T2' an einen zweiten Abzweig angeschlossen werden. Durch Leiterbahnen mit unterschiedlichen Widerstandskennlinien kann eine Kalibrierung bzw. ein Abgleich erfolgen.

Der Temperatursensor gemäß Fig. 14 kann beispielsweise als ein Foliensensor ausgestaltet sein. Hierbei kann eine Leiterbahn auf einer Trägerfolie vorgesehen werden. Zur Verbesserung des Foliensensors kann eine zweite Leiterbahn auf der Trägerfolie vorgesehen werden. Dieser Foliensensor kann als ein Integralsensor zur Messung der Temperatur am Speicher des Warmwasserspeichers verwendet werden. Die Temperaturinformationen können dann beispielsweise in dem in dem ersten Ausführungsbeispiel gezeigten Regler verwendet werden.

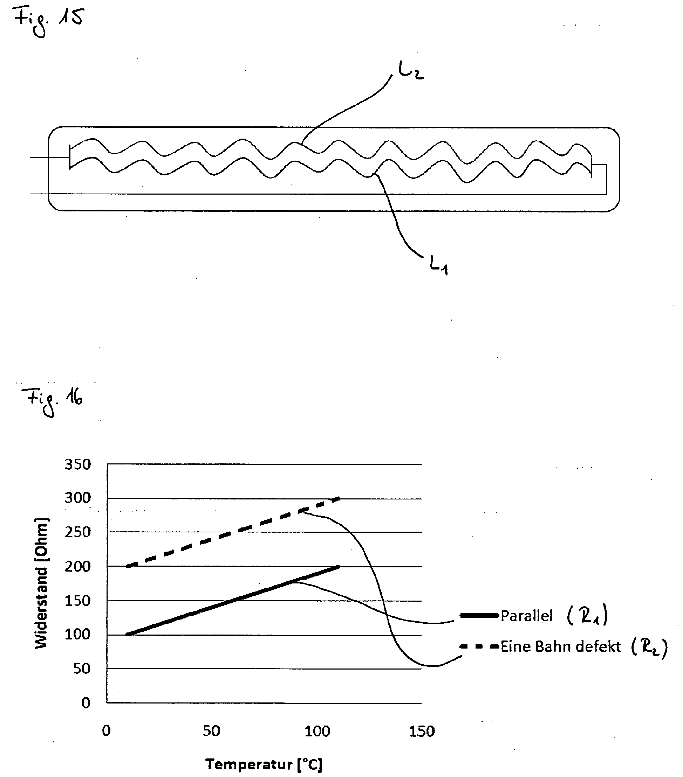

Fig. 15 zeigt eine schematische Ansicht eines Temperatursensors gemäß einer weiteren Ausführungsform. Eine erste Leiterbahn L₁ ist mit einer zweiten Leiterbahn L₂ parallel verschaltet.

Fig. 16 zeigt eine Kennlinie von Leiterbahnen gemäß der in Fig. 15 gezeigten Ausführungsform. Die Kennlinie R₁ beschreibt eine Widerstandskennlinie bei zwei parallel geschalteten Leiterbahnen. Die Kennlinie R₂ beschreibt eine Widerstandskennlinie bei einer defekten Leiterbahn. Vorzugsweise sind beide Kennlinien R₁ und R₂ in der Steuerelektronik hinterlegt, so dass die Elektronik in dem Fall, dass eine Leiterbahn defekt ist und die entsprechenden Widerstandwerte deutlich über den Werten von zwei parallel verschalteten Bahnen liegen, in diesem Bespiel um 100 Ohm höher, diesen Defekt erkennt und die zweite Kennlinie verwendet, so dass die Elektronik weiterhin zuverlässige Messergebnisse liefert. Die Abweichung zwischen der parallelen Verschaltung und der aufgehobenen Parallelverschaltung in Folge eines Defekts in der Auswerteelektronik kann hinterlegt werden. In diesem Beispiel liegt die Abweichung bei 100 Ohm. Wenn also die Widerstandswerte um etwa 100 Ohm über den üblichen Widerstandswerten liegen, erkennt die Elektronik diese Abweichung und legt eine neue Kennlinie ab, so dass sie weiterhin zuverlässige Messergebnisse liefert.

Der Foliensensor kann auf Kevla-Faden aufgewickelte sehr dünne Widerstandsdrähte aufweisen. Alternativ dazu kann ebenfalls eine Widerstandsbahn auf einer Trägerfolie ausgebildet werden.

Die Leiterbahnen auf dem Foliensensor können beispielsweise durch ein Siebdruckverfahren aufgebracht werden.

## Patentansprüche

1. Warmwasserbereiter, mit
einem elektrischen Heizkörper,
einer Wasserführungseinheit,
einem Temperatursensor und
einem Regler (100) zum Regeln der Temperatur des sich in der Wasserführungseinheit befindlichen Wassers,
**dadurch gekennzeichnet, dass** der Regler (100) eine erste Regeleinheit (31) und eine zweite Regeleinheit (32) aufweist, wobei die zweite Regeleinheit zum Durchführen einer Regelung basierend auf einer variablen Hysterese dient, wobei die Hysterese von einem Parameter abhängt.

2. Warmwasserbereiter nach Anspruch 1, wobei der Parameter die Temperatur des Wassers in der Wasserführungseinheit, eine gezapfte Wassermenge und/oder ein Zeitintervall nach einem letzten Zapfvorgang aufweist.

3. Warmwasserbereiter nach Anspruch 1 oder 2, wobei die erste Regeleinheit (31) dazu ausgestaltet ist, eine Regelung mit einer konstanten Hysterese durchzuführen, wobei in einer ersten Betriebsart die erste Regeleinheit (31) und in einer zweiten Betriebsart die zweite Regeleinheit (32) aktiviert wird.

4. Warmwasserbereiter nach Anspruch 3, wobei die erste Betriebsart eine normale Betriebsart und die zweite Betriebsart eine Standby-Betriebsart darstellt.

5. Warmwasserbereiter nach einem der Ansprüche 3 oder 4, ferner mit einer Bedieneinheit, wobei durch Betätigung der Bedieneinheit zwischen der ersten und zweiten Betriebsart geschaltet werden kann.

6. Warmwasserbereiter nach einem der Ansprüche 1 bis 5, wobei die variable Hysterese der zweiten Regeleinheit (32) mit steigender Höhe des Parameters ansteigt.

7. Warmwasserbereiter nach einem der Ansprüche 1 oder 2,
wobei der Regler in einer Normalbetriebsart dazu ausgestaltet ist, die Temperatur des sich in der Wasserführungseinheit befindlichen Wassers auf eine erste Solltemperatur zu regeln, und
wobei der Regler in einer Energiesparbetriebsart dazu ausgestaltet ist, die Temperatur des sich in der Wasserführungseinheit befindlichen Wassers auf eine zweite Solltemperatur zu regeln, wenn die Temperatur des sich in der Wasserführungseinheit befindlichen Wassers unter die zweite Solltemperatur sinkt,
wobei die zweite Solltemperatur niedriger als die erste Solltemperatur ist.

8. Warmwasserbereiter nach Anspruch 7,
wobei die erste und / oder zweite Solltemperatur einstellbar ist,
wobei die Aktivierung der Energiesparbetriebsart einstellbar ist.

9. Warmwasserbereiter nach einem der Ansprüche 3 bis 8, wobei der Temperatursensor zum Bestimmen des Ladegrads des Warmwasserspeichers ausgestaltet ist und
wobei der Regler in der ersten Betriebsart dazu ausgestaltet ist, die Temperatur des sich in dem Warmwasserspeicher befindlichen Wassers auf einen unteren Schwellwert des Ladegrades zu regeln, wobei der Regler in der zweiten Betriebsart dazu ausgestaltet ist, die Temperatur des sich in dem Warmwasserspeicher befindlichen Wassers zwischen einem einstellbaren oberen und einem einstellbaren unteren Schwellwert des Ladegrades zu regeln.

10. Warmwasserbereiter nach Anspruch 9, wobei der Warmwasserspeicher als ein Schichtspeicher ausgestaltet ist.

## Claims

1. Water heater,
comprising an electric heating element,
a water guide unit,
a temperature sensor and
a controller (100) for regulating the temperature of the water in the water guide unit, **characterised by** the fact that the controller (100) features a first control unit (31) and a second control unit (32), wherein the second control unit is used to perform regulation based on a variable hysteresis, wherein the hysteresis depends on a parameter.

2. Water heater according to Claim 1, wherein the parameter comprises the temperature of the water in the water guide unit, a dispensed quantity of water and/or a time interval after a final dispensing operation.

3. Water heater according to Claim 1 or 2, wherein the first control unit (31) is adapted to perform regulation with constant hysteresis, wherein the first control unit (31) is activated in an initial mode and the second control unit (32) is activated in a second mode.

4. A water heater according to Claim 3, wherein the initial mode is a normal operating mode and the second mode is a standby mode.

5. Water heater according to one of Claims 3 or 4, further comprising an operating unit, wherein the operating unit can be switched between the first and second operating modes.

6. Water heater according to one of Claims 1 to 5, wherein the variable hysteresis of the second control unit (32) increases with increasing value of the parameter.

7. Water heater according to one of Claims 1 or 2, wherein the controller when configured to normal operating mode regulates the temperature of the water in the water guide unit at an initial default temperature, and wherein the controller when configured in energy saving mode regulates the temperature of the water in water guide unit at a second default temperature when the temperature of the water in the water guide unit drops below the second default temperature, wherein the second default temperature is lower than the initial default temperature.

8. Water heater according to Claim 7,
wherein the initial and/or second default temperature is adjustable,
wherein activation of energy saving mode is adjustable.

9. Water heater according to one of Claims 3 to 8, wherein the temperature sensor is configured for determining the filling level of the hot water tank and wherein the controller is configured in the initial mode to regulate the temperature of the water in the hot water tank to a lower threshold of the filling level, whereby the controller in the second operating mode is designed to regulate the temperature of the water in the hot water tank between an adjustable upper and an adjustable lower threshold value of the filling level.

10. Water heater according to Claim 9, wherein the hot water tank is designed as a stratified tank.

## Revendications

1. Chauffe-eau avec un
élément chauffant électrique,
une unité de guidage de l'eau,
un capteur de température et un thermostat (100) pour réguler la température qui se trouve dans l'unité de guidage de l'eau.
**caractérisé en ce que** le thermostat (100) présente une première unité de régulation (31) et une seconde unité de régulation (32), la seconde unité de régulation servant à l'exécution d'une régulation sur la base d'une hystérèse variable, l'hystérèse dépendant d'un paramètre.

2. Chauffe-eau selon la revendication 1, le paramètre étant constitué de la température de l'eau dans l'unité de guidage de l'eau, d'une quantité d'eau tirée et/ou d'un intervalle de temps après une dernière procédure de tirage.

3. Chauffe-eau selon la revendication 1 ou 2, la première unité de régulation (31) étant conçue pour exécuter une régulation avec une hystérèse constante, la première unité de régulation (31) étant activée dans un premier mode de fonctionnement et la seconde unité de régulation (32) étant activée dans un second mode de fonctionnement.

4. Chauffe-eau selon la revendication 3, le premier mode de fonctionnement étant un mode de fonctionnement normal et le second mode de fonctionnement étant un mode de fonctionnement en veille.

5. Chauffe-eau selon l'une des revendications 3 ou 4, de plus avec une unité de commande, l'actionnement de l'unité de commande permettant de commuter entre le premier et le second mode de fonctionnement.

6. Chauffe-eau selon l'une des revendications 1 à 5, l'hystérèse variable de la seconde unité de régulation (32) augmentant avec la hausse croissante du paramètre.

7. Chauffe-eau selon l'une des revendications 1 ou 2
le thermostat dans un mode de fonctionnement normal étant conçu pour réguler la température de l'eau se trouvant dans l'unité de guidage de l'eau à une première température de consigne et le thermostat dans un mode d'économie d'énergie étant conçu pour réguler la température de l'eau se trouvant dans l'unité de guidage de l'eau à une seconde température de consigne si la température de l'eau se trouvant dans l'unité de guidage de l'eau baisse en dessous de la seconde température de consigne,
la seconde température de consigne étant inférieure à la première température de consigne.

8. Chauffe-eau selon la revendication 7
la première et/ou la seconde température de consigne étant réglable,
l'activation du mode d'économie d'énergie étant paramétrable.

9. Chauffe-eau selon l'une des revendications 3 à 8, le capteur de température étant conçu pour déterminer le degré de charge de l'accumulateur d'eau chaude et le thermostat dans le premier mode de fonctionnement étant conçu pour réguler la température de l'eau se trouvant dans l'accumulateur d'eau chaude à une valeur seuil inférieure du degré de charge, le thermostat dans le second mode de fonctionnement étant conçu pour réguler la température de l'eau se trouvant dans l'accumulateur d'eau chaude entre une valeur seuil supérieure réglable et une valeur seuil inférieure réglable du degré de charge.

10. Chauffe-eau selon la revendication 9, le chauffe-eau étant conçu comme un accumulateur à stratification.
